# EUROPÄISCHE PATENTANMELDUNG

(11) **EP 3 181 305 A1**
(43) Veröffentlichungstag der Anmeldung: **21.06.2017**
(21) Anmeldenummer: 15200665.6
(22) Anmeldetag: 17.12.2015
(51) Int. Cl.: B25F 5/02, B23D 45/16, B27B 9/00

(54) **AKKUBETRIEBENE HANDWERKZEUGMASCHINE I**

(71) Anmelder: HILTI Aktiengesellschaft, 9494 Schaan (LI)
(72) Erfinder: Baxivanelis, Konstantin, 86916 Kaufering (DE)
(74) Vertreter: Hilti Aktiengesellschaft Corporate Intellectual Property

(57) **Zusammenfassung**

Akkubetriebene Handwerkzeugmaschine (100), insbesondere Handkreissäge, mit einem Elektromotor (60) zum rotatorischen Antreiben eines an der Handwerkzeugmaschine anzuordnenden Werkzeugs (90), insbesondere Sägeblatt, einem, jeweils bezogen auf eine Vorschubrichtung (V) der Handwerkzeugmaschine, vorderen Handgriff (20) und hinteren Handgriff (30), und mit einer Aufnahmebucht zur Aufnahme eines Wechselakkus (200), wobei der hintere Handgriff um eine Schwenkachse (S) vorzugsweise nach oben ausschwenkbar gelagert ist, derart dass, wenn der hintere Handgriff in einem ausgeschwenkten Zustand (AZ) befindlich ist, die Aufnahmebucht zur Auf- oder Entnahme des Wechselakkus freigegeben ist, und, wenn der hintere Handgriff in einem eingeschwenkten Zustand (EZ) befindlich ist, die Auf- oder Entnahme des Wechselakkus in die oder aus der Aufnahmebucht gesperrt ist.

## Beschreibung

Die vorliegende Erfindung betrifft eine akkubetriebene Handwerkzeugmaschine, insbesondere eine Handkreissäge, mit einem Elektromotor zum rotatorischen Antreiben eines an der Handwerkzeugmaschine anzuordnenden Werkzeugs, insbesondere eines Sägeblatts. Die Handwerkzeugmaschine weist, jeweils bezogen auf eine Vorschubrichtung der Handwerkzeugmaschine, einen vorderen und hinteren Handgriff auf. Ferner weist die Handwerkzeugmaschine eine Aufnahmebucht zur Aufnahme eines Wechselakkus auf. Der Wechselakku dient zur Versorgung des Elektromotors.

Solche Handwerkzeugmaschinen sind grundsätzlich aus dem Stand der Technik bekannt. Ebenfalls aus dem Stand der Technik bekannt sind Handwerkzeugmaschinen in Form von Handkreissägen, deren Elektromotor ausgebildet ist, über ein Schneckengetriebe der Handwerkzeugmaschine ein Werkzeug, z.B. in Form eines Sägeblatts, anzutreiben. Bei solchen als Handkreissäge ausgestalteten Handwerkzeugmaschinen, die insbesondere aus den USA bekannt sind und typischerweise als "worm-drive saw" (WDS) bezeichnet werden, erlaubt das Schneckengetriebe eine rechtwinklige Anordnung der Motorachse (Schneckenwelle) und der Werkzeugachse, d.h. Sägeblattachse (Abtriebsachse für das Sägeblatt). Dadurch weisen als WDS ausgebildete Handkreissägen eine längliche, weniger breite Form als in Europa bevorzugte "side winder" (SW) auf, bei denen Motorachse und Sägeblattachse koaxial, zumindest aber parallel zueinander angeordnet sind.

Es ist Aufgabe der vorliegenden Erfindung, eine Handwerkzeugmaschine, insbesondere eine Handkreissäge, mit verbesserter Handhabbarkeit bereitzustellen.

Die Aufgabe wird dadurch gelöst, dass der hintere Handgriff um eine Schwenkachse nach oben ausschwenkbar gelagert ist, derart, dass, wenn der hintere Handgriff in einem ausgeschwenkten Zustand befindlich ist, die Aufnahmebucht zur Auf- oder Entnahme des Wechselakkus freigegeben ist, und, wenn der hintere Handgriff in einem eingeschwenkten Zustand befindlich ist, die Auf- oder Entnahme des Wechselakkus in die oder aus der Aufnahmebucht gesperrt ist.

Vorteilhafterweise erlaubt die erfindungsgemäße akkubetriebene Handwerkzeugmaschine ein besonders leichtes Einbringen beziehungsweise Entnehmen eines Wechselakkus. Bereits dadurch weist die erfindungsgemäße Handwerkzeugmaschine eine verbesserte Handhabbarkeit gegenüber aus dem Stand der Technik bekannten akkubetriebenen Handwerkzeugmaschinen, insbesondere Handkreissägen, auf.

Die Erfindung schließt darüber hinaus die Erkenntnis ein, dass die längliche, weniger breite Form der als WDS ausgebildeten Handkreissägen des Standes der Technik eine kopflastige Ergonomie bedingt, die für sogenannte "drop cuts", also Schnitte in vertikaler Richtung von oben nach unten, bevorzugt sind. Dadurch, dass die Aufnahmebucht zur Aufnahme des Wechselakkus durch Schwenken des hinteren Handgriffs freigebbar ist, wird neben dem bereits erwähnten vorteilhaft einfachen Akkuwechsel auch die bevorzugte Ergonomie einer als WDS ausgebildeten Handkreissäge konstruktiv zumindest begünstigt.

Vorzugsweise ist eine Länge der Handwerkzeugmaschine entlang der Vorschubrichtung wenigstens doppelt so groß wie eine Breite der Handwerkzeugmaschine quer zur Vorschubrichtung. Unter Vorschubrichtung soll im Rahmen der vorliegenden Erfindung eine Schubrichtung beim bestimmungsgemäßen Arbeiten mit der Handwerkzeugmaschine zu verstehen sein, das heißt insbesondere nicht eine möglicherweise zeitweise eingenommene Schubrichtung zum Lösen eines verklemmten Werkzeugs, insbesondere eines Sägeblatts, aus einem Werkstück.

In einer besonders bevorzugten Ausgestaltung ist die Schwenkachse parallel zu einer Rotationsachse des Werkzeugs orientiert. Vorzugsweise verläuft die Schwenkachse oberhalb, bevorzugt ausschließlich oberhalb, einer Bodenebene oder einer zu dieser Bodenebene parallelen Parallelebene. Die Bodenebene kann durch eine im Arbeitsbetrieb ein Werkstück berührende Unterseite einer in Null-Grad-Stellung befindlichen und/oder einer auf maximale Schnitttiefe eingerichteten Bodenplatte der Handwerkzeugmaschine aufgespannt sein. Die Bodenplatte ist in Null-Grad-Stellung befindlich, wenn die im Arbeitsbetrieb ein Werkstück berührende Unterseite der Bodenplatte senkrecht zum Werkzeug, insbesondere zu einem flächigen Sägeblatt, steht.

Die zur Bodenebene parallele Parallelebene weist vorzugsweise einen Abstand zur Bodenebene auf, vorzugsweise liegt die Rotationsachse des Werkzeugs in der Parallelebene.

Es hat sich als vorteilhaft herausgestellt, wenn die Schwenkachse, vorzugsweise ausschließlich, in einer dem hinteren Handgriff zugewandten Raumseite einer Achsebene verläuft. Die Achsebene ist vorzugsweise durch die Rotationsachse und einen Radius des Werkzeugs aufgespannt, wobei die Achsebene, vorzugsweise ausgehend von einem in Vorschubrichtung vor der Rotationsachse gelegenen Abschnitt einer Bodenebene und in Drehrichtung des Werkzeugs, einen Winkel von wenigstens 70° und vorzugsweise höchstens 90° einschließt. Ebenfalls bevorzugt verläuft die Schwenkachse ausschließlich in einem Raumbereich, der von einer Mantelfläche eines koaxial zur Rotationsachse des Werkzeugs definierten Zylinders eingeschlossen ist. Es hat sich als vorteilhaft herausgestellt, wenn der Zylinder einen Durchmesser aufweist, der höchstens 2,5-mal so groß ist wie ein maximal möglicher Werkzeugdurchmesser einer jeweiligen Handwerkzeugmaschine. Der Durchmesser kann alternativ dazu höchstens 1,5-mal so groß sein wie ein maximal möglicher Werkzeugdurchmesser einer jeweiligen Handwerkzeugmaschine.

Die Schwenkachse kann, vorzugsweise ausschließlich, in einer dem vorderen Handgriff zugewandten Raumseite einer Handgriffebene verlaufen. Vorzugsweise wird die Handgriffebene durch die Rotationsachse und einen Radius des Werkzeugs aufgespannt, wobei die Handgriffebene, ausgehend von einem in Vorschubrichtung hinter der Rotationsachse gelegenen Abschnitt einer Grundplattenebene und in entgegengesetzter Drehrichtung des Werkzeugs, einen Winkel von wenigstens 20° und vorzugsweise wenigstens 30° einschließt.

Es sei an dieser Stelle ausdrücklich darauf hingewiesen, dass die gerade definierten Lagebedingungen der Schwenkachse sowohl für sich genommen als auch in Kombination gelten können. Derart schließen beispielsweise die Handgriffebene, die Achsebene und die Mantelfläche einen Raumbereich in Form eines dreidimensionalen Tortenstücks ein, in dem die Schwenkachse angeordnet bzw. anzuordnen ist.

In einer bevorzugten Ausgestaltung verläuft die Schwenkachse durch einen Griffträger des vorderen Handgriffs. Die Schwenkachse kann durch einen Zylinderstift, der in einer vorzugsweise im Griffträger ausgebildeten Stiftaufnahme ausgebildet ist, gelagert sein. Der Griffträger des vorderen Handgriffs kann Teil eines Gehäuses der Handwerkzeugmaschine sein oder an einem solchen befestigt sein.

Es hat sich als vorteilhaft herausgestellt, wenn ein durch einen Schwenkanschlag und einen Gegenanschlag beschränkter Schwenkwinkel zwischen eingeschwenktem Zustand und ausgeschwenktem Zustand des hinteren Handgriffs, ausgehend von einem in Vorschubrichtung nach der Rotationsachse gelegenen Abschnitt einer Bodenebene und in entgegengesetzt Richtung des Werkzeugs größer als 20° und kleiner als 60° ist.

Bevorzugt weist die Handwerkzeugmaschine einen Rastmechanismus auf, der ausgebildet ist, den hinteren Handgriff in dem ausgeschwenkten Zustand sicher zu halten, vorzugsweise bis zum Überwinden einer Federsperrkraft durch den Anwender.

Die Federsperrkraft kann beispielsweise durch ein Druckstück mit Kugel und Feder und wenigstens einer korrespondierenden Rastvertiefung ausgebildet sein. Vorzugsweise ist ein derartiger Mechanismus nahe der Schwenkachse ausgebildet, was einen besonders kompakten Aufbau ermöglicht. Der Rastmechanismus kann alternativ durch eine magnetische Paarung, vorzugsweise im Bereich des Schwenkanschlags und/oder des Gegenanschlags, ausgebildet sein. Ebenfalls ist es möglich, den Rastmechanismus mittels Schlingfederreibung zu realisieren. Jede dieser Möglichkeiten ist derart ausgestaltet, dass der hintere Handgriff so lange in dem ausgeschwenkten Zustand sicher gehalten wird, bis eine durch den Anwender auf den hinteren Handgriff aufgebrachte Kraft die Federsperrkraft des Rastmechanismus überwindet.

In einer besonders bevorzugten Ausgestaltung weist der hintere Handgriff einen Verriegelungsmechanismus auf, der ausgebildet ist, den hinteren Handgriff in seinem eingeschwenkten Zustand zu fixieren und/oder bedarfsweise für eine Schwenkbewegung freizugeben. Es hat sich als vorteilhaft herausgestellt, wenn unterhalb der Aufnahmebucht eine Stabilisierungsschiene angeordnet ist, die vorzugsweise entgegen der Vorschubrichtung über die Aufnahmebucht hinaus kragt und an der der hintere Handgriff in seinem eingeschwenkten Zustand vorzugsweise fixiert werden kann.

Eine Fixierung des hinteren Handgriffs in seinem eingeschwenkten Zustand an der Stabilisierungsschiene ermöglicht eine hohe Stabilität des hinteren Handgriffs und somit einen optimalen Kraftfluss in Vorschubrichtung der Handwerkzeugmaschine.

Es hat sich als vorteilhaft herausgestellt, wenn der Verriegelungsmechanismus ein mechanisches Schaltelement umfasst, das in eine dafür vorgesehene Ausnehmung, die vorzugsweise an der Stabilisierungsschiene ausgebildet ist, eingreifen kann. Dies vorzugsweise wenn der hintere Handgriff im eingeschwenkten Zustand ist. Über einen solchen Verriegelungsmechanismus wird der hintere Handgriff derart verriegelt, dass ein besonders sicherer Betrieb der Handwerkzeugmaschine durch Vermeiden eines ungewünschten Schwenkens des hinteren Handgriffs realisiert wird. Der Verriegelungsmechanismus kann ausgebildet sein, dass er bei eingeschwenktem Zustand selbsttätig verriegelt. Alternativ kann der Verriegelungsmechanismus ausgebildet sein, durch die Betätigung eines Bedienelements durch den Anwender verriegelt zu werden.

Bevorzugt wird die Sicherheit der Handwerkzeugmaschine dadurch erhöht, dass diese einen Sicherheitsschalter aufweist, der mit dem hinteren Handgriff verbunden ist und ausgebildet ist, in dem entriegelten Zustand des Verriegelungsmechanismus und/oder beim Vorliegen des ausgeschwenkten Zustands eine Stromzufuhr zum Elektromotor zu unterbrechen. Der Sicherheitsschalter kann unmittelbar die Hauptstromversorgung der Handwerkzeugmaschine unterbrechen oder aber einer Elektronik den Zustand des Verriegelungsmechanismus übermitteln und über eine in der Elektronik vorgesehene Logik ein Anlaufen der Handwerkzeugmaschine, insbesondere einer Säge, trotz Drückens des Ein/Aus-Schalters unterbinden. Der Sicherheitsschalter kann elektrisch, magnetisch und/oder optisch ausgebildet sein. Mehrere Möglichkeiten der Anordnung des Sicherheitsschalters sind denkbar. Der Sicherheitsschalter kann beispielsweise Teil des mechanischen Schaltelements sein oder mit diesem mechanisch verbunden sein. Alternativ oder zusätzlich kann der Sicherheitsschalter im Bereich der Schwenkachse des hinteren Handgriffs angeordnet sein. Alternativ oder zusätzlich ist es denkbar, den Sicherheitsschalter in einem Bereich des hinteren Handgriffs anzuordnen, der bei eingeschwenktem Zustand des hinteren Handgriffs in Kontakt mit einem in der Aufnahmebucht aufgenommenen Wechselakku steht. Es wurde als vorteilhaft erkannt, den Sicherheitsschalter als Teil des mechanischen Schaltelements auszubilden.

In einer weiteren bevorzugten Ausgestaltung weist die Aufnahmebucht eine Schienenführung auf, über die der Wechselakku in die Aufnahmebucht eingeschoben und aus dieser herausgezogen werden kann. Vorzugsweise ist die Schienenführung und/oder ist der Wechselakku derart ausgebildet, dass ein Herausziehen des Wechselakkus erst nach Betätigung eines Freigabeelements möglich ist. Vorzugsweise ist das Freigabeelement als Knopf ausgebildet und am Wechselakku angeordnet.

Es hat sich ebenfalls als vorteilhaft herausgestellt, wenn eine Handangriffsfläche des hinteren Handgriffs, bezogen auf die Vorschubrichtung der Handwerkzeugmaschine, hinter dem in der Aufnahmebucht aufgenommenen Wechselakku aufgenommen ist. In einer besonders bevorzugten Ausgestaltung ist das Werkzeug, bezogen auf die Vorschubrichtung der Handkreissäge, links oder rechts vom Elektromotor angeordnet. Die Ausgangswelle des Elektromotors kann parallel zur Rotationsachse des Werkzeugs, insbesondere des Sägeblatts, verlaufen. Die Handwerkzeugmaschine, insbesondere als Handkreissäge, ist vorzugsweise zumindest doppelt so lang wie breit. Vorzugsweise ist die Handwerkzeugmaschine frei von einem Schneckengetriebe. Derart kann die beispielsweise als akkubetriebene Handkreissäge ausgestaltete Handwerkzeugmaschine die Ergonomie einer als WDS bereitgestellten und in Form einer Handkreissäge ausgestalteten Handwerkzeugmaschine erreichen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

### Es zeigen:

- Fig. 1: ein bevorzugtes Ausführungsbeispiel einer erfindungsgemäßen als akkubetriebenen Handkreissäge ausgestaltete Handwerkzeugmaschine in Seitenansicht;
- Fig. 2: eine perspektivische Darstellung des Ausführungsbeispiels aus Fig. 1;
- Fig. 3: eine Seitenansicht des Ausführungsbeispiels der Fig. 1 mit ausgeschwenktem hinteren Handgriff;
- Fig. 4: eine perspektivische Darstellung der Ansicht aus Fig. 3;
- Fig. 5: eine weitere perspektivische Darstellung der Ansicht des Ausführungsbeispiels der Fig. 3 mit eingeschwenktem hinterem Handgriff;
- Fig. 6: die als akkubetriebenen Handkreissäge ausgestaltete Handwerkzeugmaschine der Fig. 5 mit ausgeschwenktem hinterem Handgriff.

### Ausführungsbeispiel:

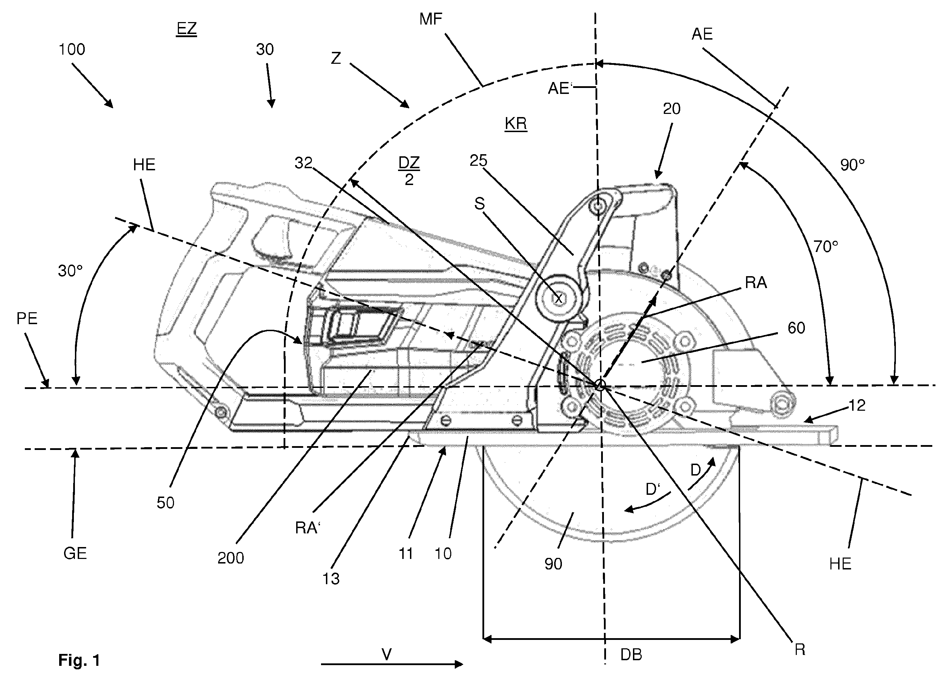

Ein bevorzugtes Ausführungsbeispiel einer als akkubetriebenen Handkreissäge ausgestalteten Handwerkzeugmaschine 100 ist in Fig. 1 dargestellt. Die akkubetriebene Handkreissäge 100 weist einen Elektromotor 60 zum rotatorischen Antreiben eines an der Handkreissäge 100 angeordneten als Sägeblatt ausgestalteten Werkzeugs 90 auf. Das Sägeblatt 90 wird rotatorisch um eine Rotationsachse R angetrieben, die vorliegend in die Zeichenebene hinein weist. Im bestimmungsgemäßen Sägebetrieb dreht sich das Sägeblatt 90 in Drehrichtung D. Mit anderen Worten: dreht sich das Sägeblatt 90 derart, dass die Handkreissäge 100 im Sägebetrieb an ein zu sägendes Werkstück (nicht gezeigt) herangezogen wird.

Im bestimmungsgemäßen Betrieb wird die Handkreissäge 100 in Vorschubrichtung V vorgeschoben. Die Vorschubrichtung ist in Fig. 1 mit einem horizontalen nach rechts weisenden Pfeil dargestellt. Die Handkreissäge 100 weist einen vorderen Handgriff 20 und einen hinteren Handgriff 30 auf. Bezogen auf die Vorschubrichtung V der Handkreissäge 100 ist der vordere Handgriff 20 vor dem hinteren Handgriff 30 angeordnet.

Des Weiteren weist die Handkreissäge 100 eine Aufnahmebucht 50 zur Aufnahme eines Wechselakkus 200 auf. In dem in Fig. 1 dargestellten Ausführungsbeispiel ist der Wechselakku 200 zum Betrieb des Elektromotors 60 der Handkreissäge 100 in der Aufnahmebucht 50 vollständig aufgenommen.

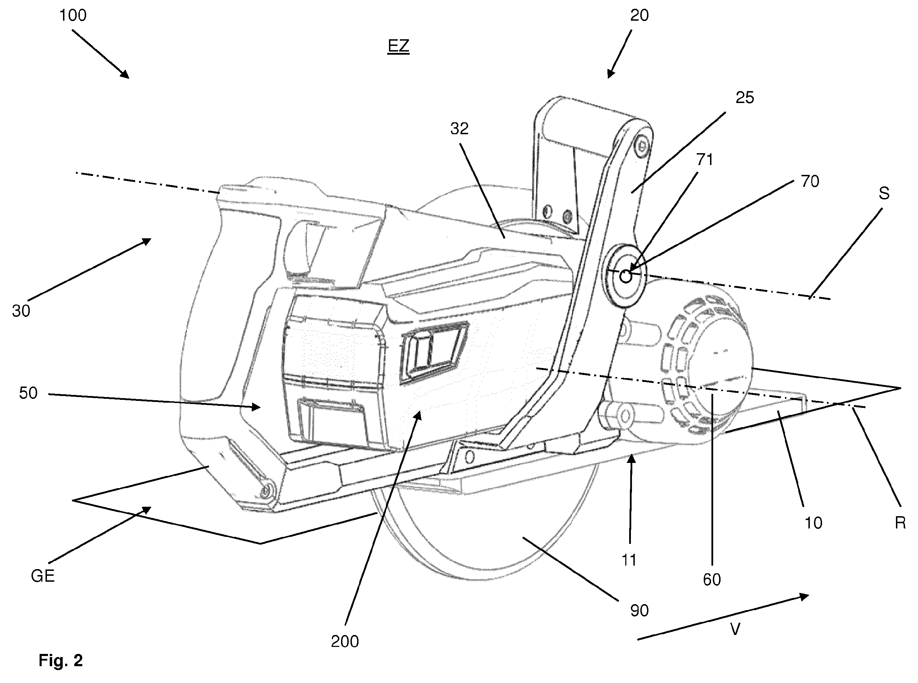

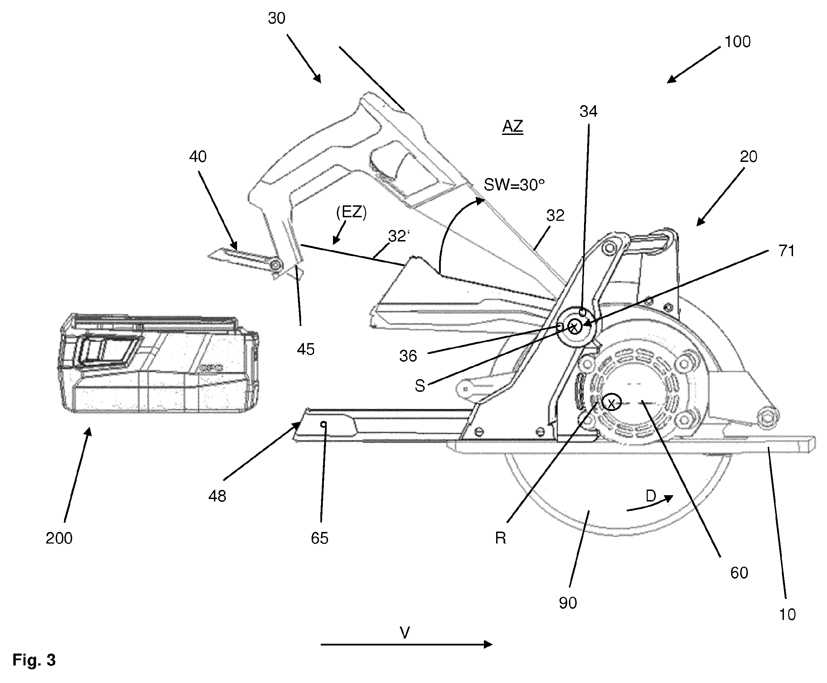

Erfindungsgemäß ist der hintere Handgriff 30 um eine Schwenkachse S schwenkbar gelagert. In Fig. 1 weist die Schwenkachse S in die Bildebene hinein. Der hintere Handgriff 30 ist derart um die Schwenkachse S schwenkbar gelagert, dass, wenn der hintere Handgriff 30 in einem ausgeschwenkten Zustand (vgl. Fig. 3) befindlich ist, die Aufnahmebucht 50 zur Auf- oder Entnahme des Wechselakkus 200 freigegeben ist. Ferner ist der hintere Handgriff 30 um die Schwenkachse S derart schwenkbar gelagert, dass, wenn der hintere Handgriff 30 in eingeschwenktem Zustand EZ (vgl. Fig. 1 und 2) befindlich ist, die Auf- oder Entnahme des Wechselakkus 200 in die oder aus der Aufnahmebucht 50 gesperrt ist.

Wie aus einer Zusammenschau von Fig. 1 und Fig. 3 ersichtlich wird, ist der hintere Handgriff 30 nach oben ausschwenkbar gelagert, d.h. der hintere Handgriff 30 liegt in ausgeschwenkten Zustand AZ (Fig. 3), bezogen auf die Vertikale, höher als der hintere Handgriff 30 in eingeschwenktem Zustand EZ (Fig. 1).

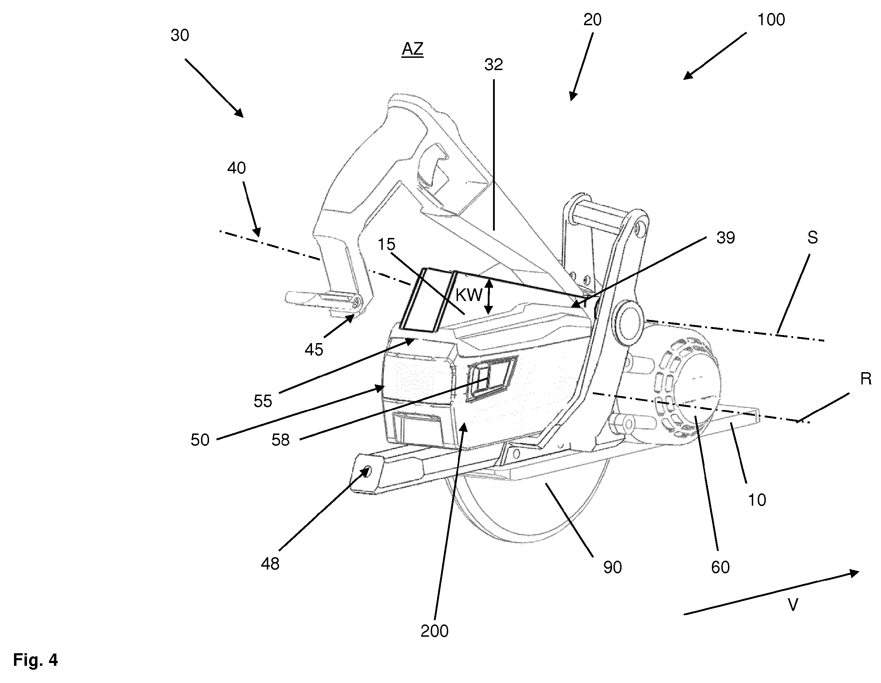

Bei einem bevorzugten Ausführungsbeispiel der Fig. 1 verläuft die Schwenkachse S parallel zu der Rotationsachse R des Sägeblatts 90. Dies ist in den perspektivischen Darstellungen der Fig. 2 und 4 besonders gut zu erkennen.

Die Schwenkachse S verläuft ausschließlich oberhalb einer Bodenebene GE. Die Bodenebene GE kann auch als Grundplattenebene ausgestaltet sein. Die Bodenebene GE entspricht dabei der Grundplattenebene. Hierbei weist die als Handkreissäge ausgestaltete Handwerkzeugmaschine 100 eine Bodenplatte 10 auf. Die Bodenplatte kann auch als Grundplatte bezeichnet werden. Dies ist insbesondere der Fall, wenn die Handwerkzeugmaschine eine Grundplatte enthält. Es ist jedoch auch möglich, dass die Handwerkzeugmaschine 100 keine Bodenplatte 10 bzw. Grundplatte enthält. Eine als Bodenebene ausgestaltete Bodenebene GE wird durch eine im Arbeitsbetrieb ein Werkstück berührende Unterseite 11 einer Null-Grad-Stellung befindlichen und auf maximale Schnitttiefe eingerichteten Bodenplatte 10 der Handkreissäge 100 aufgespannt. Die durch Unterseite 11 der Bodenplatte 10 aufgespannte Bodenebene GE ist ebenfalls in der perspektivischen Darstellung der Fig. 2 verdeutlicht.

In Fig. 1 ist eine zu der Bodenebene GE parallel verlaufende Parallelebene PE dargestellt. Die in die Zeichenebene hinein weisende Rotationsachse R des Sägeblatts 90 liegt in dieser Parallelebene PE. Die parallel zu der Rotationsachse R orientierte Schwenkachse S verläuft ausschließlich oberhalb dieser Parallelebene PE.

Ebenfalls in Fig. 1 dargestellt ist eine Achsebene AE, die durch die Rotationsachse R und durch einen Radius RA des Sägeblatts 90 aufgespannt ist. Die Achsebene AE schließt, ausgehend von einem in Vorschubrichtung V vor der Rotationsachse R gelegenen Abschnitt 12 der Grundplatte 10 und in Drehrichtung D des Sägeblatts 90, einen Winkel von 70° ein. Aus Gründen der Deutlichkeit ist in Fig. 1 ebenfalls eine zweite Achsebene AE' dargestellt, die einen Winkel von 90° einschließt. In beiden Fällen ist die Schwenkachse S ausschließlich einer dem hinteren Handgriff 30 zugewandten Raumseite der Achsebene AE, AE' enthalten.

Ebenfalls in Fig. 1 dargestellt ist ein Ausschnitt einer Mantelfläche MF eines koaxial zur Rotationsachse R des Sägeblatts 90 definierten Zylinders Z. Im vorliegenden dargestellten Ausführungsbeispiel weist der Zylinder Z einen Durchmesser auf, der etwa zweimal so groß ist wie ein maximal möglicher Sägeblattdurchmesser DB des Sägeblatts 90 der Handkreissäge 100. In Fig. 1 ist der Durchmesser DZ des Zylinders als DZ/2 bezeichnet, da die Strecke nur zwischen Rotationsachse R und Mantelfläche MF eingezeichnet ist.

Ebenfalls in Fig. 1 dargestellt ist eine Handgriffebene HE, die durch die Rotationsachse R und einen Radius RA' des Sägeblatts 90 aufgespannt ist. Die Handgriffebene HE schließt, ausgehend von einem in Vorschubrichtung V hinter der Rotationsachse R gelegenen Abschnitt 13 der Bodenplatte 10 und in entgegengesetzter Drehrichtung D des Sägeblatts 90 beispielhaft einen Winkel von 30°. Die Schwenkachse S verläuft ausschließlich in einer dem vorderen Handgriff 20 zugewandten Raumseite der Handgriffebene HE.

Die Handgriffebene HE, die Achsebene AE und die Mantelfläche MF definieren im vorliegend dargestellten Ausführungsbeispiel einen tortenstückförmigen Raumbereich KR, in dem die Schwenkachse S, die parallel zur Rotationsachse R verläuft, ausschließlich verläuft.

Wie ebenfalls der Fig. 1 entnommen werden kann, verläuft die Schwenkachse S durch einen Griffträger 25 des vorderen Handgriffs 20.

Fig. 2 zeigt nunmehr eine perspektivische Darstellung der Handwerkzeugmaschine 100 aus Fig. 1, genauer gesagt eine Ansicht von hinten rechts bezogen auf die Vorschubrichtung V. Der Darstellung der Fig. 2 ist zu entnehmen, dass das Sägeblatt 90 links vom Elektromotor 60 angeordnet ist. Die mit Bezug auf Fig. 1 bereits erläuterte Bodenebene GE, die durch die Unterseite 11 der Bodenplatte 10 aufgespannt wird, ist aus Gründen der Deutlichkeit auch in der perspektivischen Darstellung der Fig. 2 eingezeichnet.

Wie der Fig. 2 ebenfalls gut entnommen werden kann, verläuft die Schwenkachse S parallel zur Rotationsachse R.

Mit Bezug auf Fig. 2 soll nun die Befestigung des hinteren Handgriffs 30 an der als Handkreissäge ausgestalteten Handwerkzeugmaschine 100 genauer erläutert werden. Die Schwenkachse S verläuft vorliegend durch einen Griffträger 25 des vorderen Handgriffs 20. Am Griffträger 25 ist sowohl die Bodenplatte 10 gelagert als auch der Elektromotor 60 beziehungsweise dessen Gehäuse befestigt. Der hintere Handgriff 30 ist durch einen Zylinderstift 70, der koaxial zur Schwenkachse S verläuft, in einer Stiftaufnahme 71 des Griffträgers 25 schwenkbar gelagert. Zu diesem Zweck weist ein Schwenkabschnitt 32 des hinteren Handgriffs 30 eine hier nicht dargestellte Bohrung auf, durch die der Zylinderstift 70 verläuft. Fig. 2 zeigt den hinteren Handgriff 30 in eingeschwenktem Zustand EZ, sodass die Auf- oder Entnahme des Wechselakkus 200 in die oder aus der Aufnahmebucht 50 gesperrt ist.

Fig. 3 zeigt das Ausführungsbeispiel der Fig. 1 und 2, wobei in Fig. 3 der hintere Handgriff 30 in seinem ausgeschwenkten Zustand AZ dargestellt ist. Im ausgeschwenkten Zustand AZ ist die Aufnahmebucht 50 zur Auf- oder Entnahme des Wechselakkus 200 freigegeben. In Fig. 3 ist der Wechselakku 200 aus der Aufnahmebucht entnommen.

Mit Bezug auf Fig. 3 soll nun ein Schwenkwinkel SW, der zwischen eingeschwenktem Zustand EZ und ausgeschwenktem Zustand AZ des hinteren Handgriffs 30 definiert ist, genauer erläutert werden.

In Fig. 3 angedeutet ist ein Schwenkanschlag 34 und ein Gegenanschlag 36 im Bereich der Stiftaufnahme 71 (vgl. auch Fig. 2), die den Schwenkwinkel SW beschränken. Bei einem Schwenkwinkel von 0° befindet sich der hintere Handgriff 30 im eingeschwenkten Zustand EZ, der beispielsweise den Fig. 1 und 2 entnommen werden kann.

In Fig. 3 ist der eingeschwenkte Zustand EZ lediglich durch Andeutung des Schwenkabschnitts 32' dargestellt. Im eingeschwenkten Zustand EZ verläuft der Schwenkabschnitt 32', der gleichsam den nach oben gerichteten Rücken des hinteren Griffabschnitts 30 definiert, in einem Winkel von etwa 20° zur Horizontalen. Ausgehend von diesem eingeschwenkten Zustand EZ ist in Fig. 3 der ausgeschwenkte Zustand AZ mit einem Schwenkwinkel von 30° dargestellt. Selbstverständlich kann ein Schwenkwinkel auch unmittelbar auf die Bodenebene GE (vgl. Fig. 1) bezogen sein. In diesem Falle wäre der in Fig. 3 dargestellte hintere Handgriff 30 um etwa 50° bezogen auf die Bodenebene GE ausgeschwenkt.

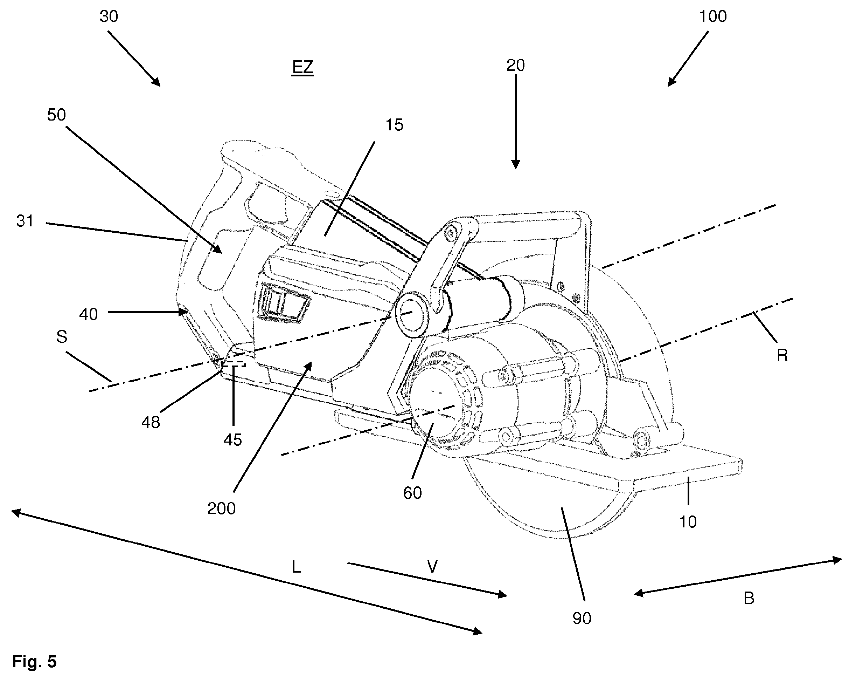

Im Folgenden sollen mit Bezug auf Fig. 3 besondere Sicherheitsmerkmale der als Handkreissäge ausgestalteten Handwerkzeugmaschine 100 erläutert werden. Am hinteren Handgriff 30 der Handwerkzeugmaschine 100 ist ein Verriegelungsmechanismus 40 ausgebildet, mit dem der hintere Handgriff 30 in seinem eingeschwenkten Zustand EZ fixiert und bedarfsweise für eine Schwenkbewegung freigegeben werden kann. Am Verriegelungsmechanismus 40 ist ein mechanisches Schaltelement 45 ausgebildet, das in eine korrespondierende Ausnehmung 48 eingreifen kann. Wie der Fig. 4 entnommen werden kann, ist die Ausnehmung 48 für das mechanische Schaltelement 45 an einer Stabilisierungsschiene 59 ausgebildet, die entgegen der Vorschubrichtung V über die Aufnahmebucht 50 hinaus auskragt. In eingeschwenktem Zustand EZ ist das Schaltelement 45 in der Ausnehmung 48 aufgenommen, was in Fig. 5 gestrichelt dargestellt ist.

In Fig. 3 wiederum dargestellt ist ein Sicherheitsschalter 65, der mit dem hinteren Handgriff 30 verbunden und im in Fig. 3 dargestellten Ausführungsbeispiel innerhalb der Stabilisierungsschiene 59 angeordnet ist. Der Sicherheitsschalter 65 ist ausgebildet, im entriegelten Zustand des Verriegelungsmechanismus 40 und beim Vorliegen des ausgeschwenkten Zustands AZ eine Stromzufuhr zum Elektromotor 60 zu unterbrechen. Ist der Verriegelungsmechanismus 40 verriegelt, beziehungsweise der hintere Handgriff 30 eingeschwenkt, wie dies in Fig. 5 der Fall ist, so signalisiert der Sicherheitsschalter 65, dass der Elektromotor 60 aktuiert werden darf.

Wie ebenfalls der Fig. 4 entnommen werden kann, weist die als Handkreissäge ausgestaltete Handwerkzeugmaschine 100 eine U-förmige Profilschiene 15 auf. Diese Profilschiene ist ausgebildet, den Schwenkabschnitt 32 des hinteren Handgriffs 30 aufzunehmen. Ist der Schwenkabschnitt 32 in der Profilschiene 15 aufgenommen, das heißt in eingeschwenktem Zustand EZ befindlich (vgl. Fig. 5), ist der hintere Handgriff 30 gegen ein unerwünschtes Verdrehen quer zur Schwenkachse S gesichert. Wie der Fig. 4 entnommen werden kann, weist die U-förmige Profilschiene 15 eine keilförmige Ausgestaltung auf, exemplarisch mit einem Keilwinkel KW von etwa 20°.

Unterhalb der U-förmigen Profilschiene 15 ist eine Schienenführung 55 ausgebildet, über die der Wechselakku 200 in die Aufnahmebucht 50 eingeschoben und aus dieser herausgezogen werden kann. Die Schienenführung 55 ist derart ausgebildet, dass ein Herausziehen des Wechselakkus 200 erst nach Betätigung eines Freigabeelements 58 am Wechselakku 200 möglich ist. Aus Fig. 4 nicht ersichtlich, ragt dafür eine durch das Freigabeelement 58 aktuierte Rastnase in eine korrespondierende Ausnehmung an der Unterseite der U-förmigen Profilschiene 15 hinein.

Die Handkreissäge 100 weist ferner einen hier nicht genauer dargestellten Rastmechanismus 39 auf, der ausgebildet ist, den hinteren Handgriff 30 in dem dargestellten ausgeschwenkten Zustand AZ sicher zu halten, bis zum Überwinden einer Federsperrkraft durch den Anwender.

Fig. 5 zeigt eine perspektivische Darstellung auf die vorbeschriebene Handwerkzeugmaschine 100 von vorne rechts. Der Verriegelungsmechanismus 40 ist vorliegend verriegelt, das heißt das Schaltelement 45 in der Ausnehmung 48 aufgenommen.

Ferner ist in Fig. 5 gut zu erkennen, dass eine Handangriffsfläche 31 des hinteren Handgriffs 30, bezogen auf die Vorschubrichtung V der Handwerkzeugmaschine 100, hinter dem in der Aufnahmebucht 50 aufgenommenen Wechselakku aufgenommen ist. Ferner kann der Fig. 5 entnommen werden, dass das als Sägeblatt ausgestaltete Werkzeug 90, bezogen auf die Vorschubrichtung V der Handwerkzeugmaschine 100, links vom Elektromotor 60 angeordnet ist. Alternativ kann das als Sägeblatt ausgestaltete Werkzeug 90, bezogen auf die Vorschubrichtung V der Handwerkzeugmaschine 100, auch rechts vom Elektromotor 60 angeordnet sein.

Eine in Fig. 5 angedeutete Motorwelle 61 des Elektromotors 60 verläuft parallel zur Rotationsachse R des Sägeblatts 90. Eine maximale Länge L der als Handkreissäge ausgestalteten Handwerkzeugmaschine 100, bezogen auf die Vorschubrichtung V, ist zumindest doppelt so lang wie eine maximale Breite B der als Handkreissäge ausgestalteten Handwerkzeugmaschine 100, senkrecht zur Vorschubrichtung V.

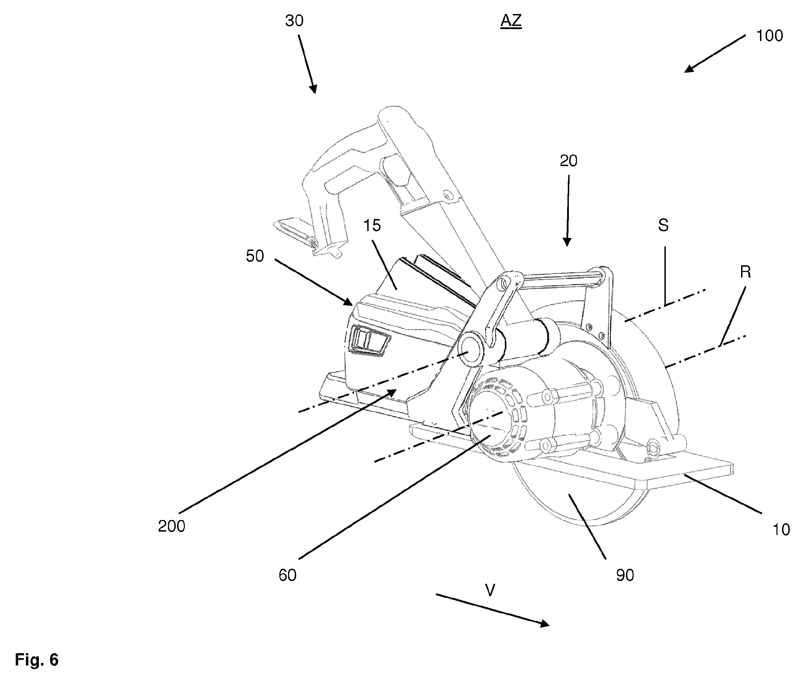

Fig. 6 zeigt schließlich die Handwerkzeugmaschine 100 aus der gleichen Perspektive wie in Fig. 5, wobei zur besseren Verdeutlichung der U-förmigen Profilierung der Profilschiene 15 der hintere Handgriff 30 in ausgeschwenktem Zustand AZ dargestellt ist.

### Bezugszeichenliste

- 10: Bodenplatte
- 11: Unterseite der Bodenplatte
- 12: vorlaufender Abschnitt
- 13: nachlaufender Abschnitt
- 15: Profilschiene
- 20: vorderer Handgriff
- 25: Griffträger des vorderen Handgriffs
- 30: hinterer Handgriff
- 31: Handangriffsfläche
- 32, 32': Schwenkabschnitt
- 34: Schwenkanschlag
- 36: Gegenanschlag
- 39: Rastmechanismus
- 40: Verriegelungsmechanismus
- 45: mechanisches Schaltelement
- 48: Ausnehmung
- 50: Aufnahmebucht
- 55: Schienenführung
- 58: Freigabeelement
- 59: Stabilisierungsschiene
- 60: Elektromotor
- 61: Motorwelle
- 65: Sicherheitsschalter
- 70: Zylinderstift
- 71: Stiftaufnahme
- 90: Werkzeug
- 100: Handwerkzeugmaschine
- 200: Wechselakku
- AE, AE': Achsebene
- B: maximale Breite der Handwerkzeugmaschine
- DB: maximaler Werkzeugdurchmesser
- DZ: Zylinderdurchmesser
- GE: Bodenebene
- KR: tortenstückförmigen Raumbereich
- L: maximale Länge der Handwerkzeugmaschine
- MF: Mantelfläche
- PE: Parallelebene
- D, D': Drehrichtung
- R: Rotationsachse
- S: Schwenkachse
- SW: Schwenkwinkel
- V: Vorschubrichtung
- Z: Zylinder

## Patentansprüche

1. Akkubetriebene Handwerkzeugmaschine (100), insbesondere Handkreissäge, mit einem Elektromotor (60) zum rotatorischen Antreiben eines an der Handwerkzeugmaschine (100) anzuordnenden Werkzeugs (90), insbesondere Sägeblatt, einem, jeweils bezogen auf eine Vorschubrichtung (V) der Handwerkzeugmaschine (100), vorderen Handgriff (20) und hinteren Handgriff (30), und mit einer Aufnahmebucht (50) zur Aufnahme eines Wechselakkus (200),
**dadurch gekennzeichnet, dass** der hintere Handgriff (30) um eine Schwenkachse (S) vorzugsweise nach oben ausschwenkbar gelagert ist, derart dass, wenn der hintere Handgriff (30) in einem ausgeschwenkten Zustand (AZ) befindlich ist, die Aufnahmebucht (50) zur Auf- oder Entnahme des Wechselakkus (200) freigegeben ist, und, wenn der hintere Handgriff (30) in einem eingeschwenkten Zustand (EZ) befindlich ist, die Auf- oder Entnahme des Wechselakkus (200) in die oder aus der Aufnahmebucht (50) gesperrt ist.

2. Handwerkzeugmaschine (100) nach Anspruch 1,
**dadurch gekennzeichnet, dass** die Schwenkachse (S) parallel zu einer Rotationsachse (R) des Werkzeugs (90) orientiert ist und vorzugsweise ausschließlich oberhalb einer Bodenebene (GE) und/oder einer zu dieser Bodenebene (GE) parallelen Parallelebene (PE) verläuft, wobei die Bodenebene (GE) durch eine im Arbeitsbetrieb ein Werkstück berührende Unterseite (11) einer in Null-Grad-Stellung befindlichen und auf maximale Schnitttiefe eingerichteten Bodenplatte (10) der Handwerkzeugmaschine (100) aufgespannt wird.

3. Handwerkzeugmaschine (100) nach Anspruch 1 oder 2,
**dadurch gekennzeichnet, dass** die Schwenkachse (S) vorzugsweise ausschließlich in einer dem hinteren Handgriff (30) zugewandten Raumseite einer Achsebene (AE, AE') verläuft, wobei die Achsebene (AE, AE') durch die Rotationsachse (R) und einen Radius (RA) des Werkzeugs (90) aufgespannt ist, wobei die Achsebene (AE, AE'), ausgehend von einem in Vorschubrichtung (V) vor der Rotationsachse (R) gelegenen Abschnitt (12) einer Bodenebene (GE) und in Drehrichtung (DR) des Werkzeugs (90), einen Winkel von wenigstens 70 Grad und vorzugsweise höchstens 90 Grad einschließt.

4. Handwerkzeugmaschine (100) nach einem der vorangehenden Ansprüche,
**dadurch gekennzeichnet, dass** die Schwenkachse (S) vorzugsweise ausschließlich in einem Raumbereich verläuft, der von einer Mantelfläche (MF) eines koaxial zur Rotationsachse (R) des Werkzeugs (90) definierten Zylinders (Z) eingeschlossen ist, wobei der Zylinder (Z) einen Durchmesser (DZ) aufweist, der höchsten 2,5 mal so groß ist wie ein maximal möglicher Werkzeugdurchmesser (DB) einer jeweiligen Handwerkzeugmaschine (100).

5. Handwerkzeugmaschine (100) nach einem der vorangehenden Ansprüche,
**dadurch gekennzeichnet, dass** die Schwenkachse (S) vorzugsweise ausschließlich in einer dem vorderen Handgriff (20) zugewandten Raumseite einer Handgriffebene (HE) verläuft, wobei die Handgriffebene (HE) durch die Rotationsachse (R) und einen Radius (RA) des Werkzeugs (90) aufgespannt ist, wobei Handgriffebene (HE), ausgehend von einem in Vorschubrichtung (V) hinter der Rotationsachse (R) gelegenen Abschnitt einer Bodenebene (GE) und in entgegengesetzter Drehrichtung (DR) des Werkzeugs (90), einen Winkel von wenigstens 20 Grad und vorzugsweise wenigstens 30 Grad einschließt.

6. Handwerkzeugmaschine (100) nach einem der vorangehenden Ansprüche,
**dadurch gekennzeichnet, dass** die Schwenkachse (S) durch einen Griffträger (25) des vorderen Handgriffs (20) verläuft und vorzugsweise durch einen Zylinderstift (70) der in einer Stiftaufnahme (71) gelagert ist.

7. Handwerkzeugmaschine (100) nach einem der vorangehenden Ansprüche,
**dadurch gekennzeichnet, dass** ein durch einen Schwenkanschlag (34) und einen Gegenanschlag (36) beschränkter Schwenkwinkel (SW) zwischen eingeschwenkten Zustand (EZ) und ausgeschwenkten (AZ) des hinteren Handgriffs (30), ausgehend von einem in Vorschubrichtung (V) hinter der Rotationsachse (R) gelegenen Abschnitt (13) einer Bodenebene (GE) und in entgegengesetzter Drehrichtung (DR') des Werkzeugs (90), größer als 20° und kleiner als 60° ist.

8. Handwerkzeugmaschine (100) nach einem der vorangehenden Ansprüche,
**dadurch gekennzeichnet, dass** die Handwerkzeugmaschine (100) einen Rastmechanismus (39) aufweist, der ausgebildet ist, den hinteren Handgriff (30) in dem ausgeschwenkten Zustand (AZ) sicher zu halten, vorzugsweise bis zum Überwinden einer Federsperrkraft durch den Anwender.

9. Handwerkzeugmaschine (100) nach einem der vorangehenden Ansprüche,
**dadurch gekennzeichnet, dass** der hintere Handgriff (30) einen Verriegelungsmechanismus (40) aufweist, der ausgebildet ist, den hinteren Handgriff (30) in seinem eingeschwenkten Zustand (EZ) zu fixieren und bedarfsweise für eine Schwenkbewegung freizugeben.

10. Handwerkzeugmaschine (100) nach Anspruch 9,
**dadurch gekennzeichnet, dass** unterhalb der Aufnahmebucht (50) eine Stabilisierungsschiene (59) angeordnet ist, die vorzugsweise entgegen der Vorschubrichtung (V) über die Aufnahmebucht (50) hinaus auskragt und an der der hintere Handgriff (30) in seinem eingeschwenkten Zustand (EZ) fixiert werden kann.

11. Handwerkzeugmaschine (100) nach Anspruch 10,
**dadurch gekennzeichnet, dass** der Verriegelungsmechanismus (40) ein mechanisches Schaltelement (45) umfasst, das in eine dafür vorgesehene Ausnehmung (48), die an der Stabilisierungsschiene (59) ausgebildet ist, eingreifen kann, wenn der hintere Handgriff (30) im eingeschwenkten (EZ) Zustand ist.

12. Handwerkzeugmaschine (100) nach einem der Ansprüche 9 bis 11,
**dadurch gekennzeichnet, dass** ein Sicherheitsschalter (65) mit dem hinteren Handgriff (30) verbunden ist und ausgebildet ist, in dem entriegelten Zustand des Verriegelungsmechanismus (40) und/oder beim Vorliegen des ausgeschwenkten Zustands (AZ) eine Stromzufuhr zum Elektromotor (60) zu unterbrechen.

13. Handwerkzeugmaschine (100) nach einem der vorangehenden Ansprüche,
**dadurch gekennzeichnet, dass** die Handwerkzeugmaschine (100) eine vorzugsweise u-förmige Profilschiene (15) aufweist, die ausgebildet ist einen Schwenkabschnitt (32) des hinteren Handgriffs (30) zumindest quer zur Schwenkachse (S) formschlüssig aufzunehmen, wenn der hintere Handgriffs (30) in eingeschwenktem Zustand befindlich ist.

14. Handwerkzeugmaschine (100) nach einem der vorangehenden Ansprüche,
**dadurch gekennzeichnet, dass** die Aufnahmebucht (50) eine Schienenführung (55) aufweist über die der Wechselakku (200) in die Aufnahmebucht (50) eingeschoben und aus dieser heraus ausgezogen werden kann, wobei die Schienenführung (55) und/oder der Wechselakku (200) vorzugsweise derart ausgebildet ist, dass ein Herausziehen des Wechselakkus (200) erst nach Betätigung eines Freigabeelements (58) möglich ist.

15. Handwerkzeugmaschine (100) nach einem der vorangehenden Ansprüche,
**dadurch gekennzeichnet, dass** eine Handangriffsfläche (31) des hinteren Handgriffs (30), bezogen auf die Vorschubrichtung (V) der Handwerkzeugmaschine (100), hinter dem in der Aufnahmebucht (50) aufgenommenen Wechselakku (200) aufgenommen ist.

16. Handwerkzeugmaschine (100) nach einem der vorangehenden Ansprüche,
**dadurch gekennzeichnet, dass** das Werkzeug (90), bezogen auf die Vorschubrichtung (V) der Handwerkzeugmaschine (100), links vom Elektromotor (60) angeordnet ist, die Ausgangswelle des Elektromotors (60) parallel zur Rotationsachse (R) des Werkzeugs (90) verläuft, und wobei die Handwerkzeugmaschine (100) zumindest doppelt so lang wie breit ausgebildet ist.

17. Handwerkzeugmaschine (100) nach wenigstens einem der vorangehenden Ansprüche 1 bis 15,
**dadurch gekennzeichnet, dass** das Werkzeug (90), bezogen auf die Vorschubrichtung (V) der Handwerkzeugmaschine (100), rechts vom Elektromotor (60) angeordnet ist, die Ausgangswelle des Elektromotors (60) parallel zur Rotationsachse (R) des Werkzeugs (90) verläuft, und wobei die Handwerkzeugmaschine (100) zumindest doppelt so lang wie breit ausgebildet ist.
